# EUROPÄISCHE PATENTSCHRIFT

(11) **EP 1 318 000 B1**
(45) Veröffentlichungstag und Bekanntmachung des Hinweises auf die Patenterteilung: **22.03.2006**
(21) Anmeldenummer: 02027105.2
(22) Anmeldetag: 04.12.2002
(51) Int. Cl.: B27N 3/00, C08L 61/06, C08L 89/04

(54) **Bindemittel für die Herstellung und die Verklebung von Holz und Holzwerkstoffen**
Binder for manufacturing and binding of wood and timber products
Liant pour la fabrication et le collage de bois et de matériaux à base de bois

(30) Priorität: 05.12.2001 DE 10159550
(43) Veröffentlichungstag der Anmeldung: 11.06.2003
(73) Patentinhaber: IHD Institut für Holztechnologie Dresden gGmbH, 01217 Dresden (DE)
(72) Erfinder: Krug, Detlef, 01277 Dresden (DE); Sirch, Hans-Jürgen, 01307 Dresden (DE); Lang, Jürgen, 16356 Ahrensfelde (DE); Heep, Wolfgang, 15569 Woltersdorf (DE); Höpcke, Reiner, 47533 Kleve (DE)
(74) Vertreter: Kaufmann, Sigfrid

(56) Entgegenhaltungen:
- WO-A-96/14970
- GB-A- 583 236
- US-A- 2 365 671
- US-A- 4 886 854
- US-A- 4 942 191
- DATABASE CA [Online] CHEMICAL ABSTRACTS SERVICE, COLUMBUS, OHIO, US; Database accession no. 41:11098 XP002236348 & GLEN E. BABCOCK, ALLAN K. SMITH: "Extending phenolic resin plywood glues with proteinaceous materials" IND. ENG. CHEM., Nr. 39, - 1947 Seiten 85-88,
- PATENT ABSTRACTS OF JAPAN vol. 010, no. 071 (C-334), 20. März 1986 (1986-03-20) & JP 60 210684 A (MITSUI TOATSU KAGAKU KK), 23. Oktober 1985 (1985-10-23)
- DATABASE WPI Section Ch, Week 199732 Derwent Publications Ltd., London, GB; Class A21, AN 1997-347599 XP002236349 & JP 09 143343 A (SUMITOMO BAKELITE CO LTD), 3. Juni 1997 (1997-06-03)
- PATENT ABSTRACTS OF JAPAN vol. 018, no. 562 (C-1265), 27. Oktober 1994 (1994-10-27) & JP 06 200226 A (HONEN CORP), 19. Juli 1994 (1994-07-19)
- DATABASE WPI Section Ch, Week 198404 Derwent Publications Ltd., London, GB; Class A21, AN 1984-020543 XP002236350 & JP 58 210975 A (MITSUI TOATSU CHEM INC), 8. Dezember 1983 (1983-12-08)
- PATENT ABSTRACTS OF JAPAN vol. 016, no. 563 (M-1342), 4. Dezember 1992 (1992-12-04) & JP 04 219203 A (MITSUI TOATSU CHEM INC), 10. August 1992 (1992-08-10)

## Beschreibung

Die Erfindung betrifft ein Bindemittel zur Herstellung von quellungsvergüteten Holzwerkstoffen sowie die Verklebung von Holz und Holzwerkstoffen. Die mit dem erfindungsgemäßen Bindemittel hergestellten quellungsvergüteten Holzwerkstoffe, wie beispielsweise Spanplatten, Faserplatten oder OSB können nach dem Konditionieren und Kalibrieren entweder direkt als Boden-, Decken- oder Wandplatten sowie nach Beschichtung mit harzimprägnierten Papieren, vorzugsweise mit Harnstoff-, Melamin- oder Phenol-Formaldehyd-Harzen zu Laminatfußboden- oder Paneelelementen verarbeitet werden. Für andere Einsatzgebiete dieser Werkstoffe im Möbel-, Innenausbau- oder Baubereich mit erhöhten Anforderungen an eine Feuchtebeständigkeit sollte eine direkte Beschichtung mit flüssigen oder pulverförmigen Lacksystemen erfolgen. Ein weiteres Anwendungsgebiet dieses Bindemittels sind die Verklebungen von Vollholz untereinander, z.B. bei der Herstellung von Sperrholz oder Massivholzplatten, bzw. - wie im Falle von Mehrschichtparkett oder furnierten Spanplatten - die Verklebung von Holzwerkstoffen mit Vollholz.

Die derzeit für die Holzwerkstoffherstellung im Einsatz befindlichen synthetischen Bindemittel ermöglichen die Erzeugung von Holzwerkstoffen mit zweckbestimmten Eigenschaften für unterschiedliche Einsatzgebiete. Speziell Phenolharze erlauben dabei die Herstellung von Werkstoffen für einen Einsatz im Feucht- oder Außenbereich. Obwohl diese synthetisch gebundenen Werkstoffe mittlerweile ein sehr niedriges Emissionspotential aufweisen, stoßen speziell Aminoplastharze bei Verwendung in Innenräumen wegen ihrer Formaldehydabgabe auf Skepsis in Verbraucherkreisen. Ebenfalls nachteilig wirken sich mögliche Umweltprobleme bei der späteren Entsorgung dieser Werkstoffe und daraus hergestellter Erzeugnisse aus. Als Folge wurden in den letzten Jahren intensive Untersuchungen zum Einsatz natürlicher Bindemittel auf Basis nachwachsender Rohstoffe für bestimmte Holzwerkstoff-Einsatzgebiete durchgeführt.

Als alternative Klebstoffe sind natürlich lösliche Polymere geeignet, die sich entweder thermisch oder durch Umsetzung mit einer reaktiven Komponente in eine unlösliche Form umwandeln lassen. Die gebräuchlichsten natürlichen Bindemittel lassen sich in Proteine, Polysaccharide (z.B. Stärkederivate), Polyphenole (z.B. Tannin, Lignin) sowie Harze und Wachse unterteilen.

Die Eignung eines isolierten Proteins zur Bindemittelformulierung wird einerseits von seiner Primärstruktur (Aminosäuresequenz) und den überlagerten Folgestrukturen bestimmt, anderseits beeinflusst das lsolierverfahren den Umfang der Denaturierung und damit das Löseverhalten. Je nach lsolierverfahren werden Proteine unterschiedlich stark denaturiert, was für eine Formulierung von Bindemitteln dienlich oder auch von Nachteil ist (Cheftel, J. C.; Cuq, J. L.; Lorient, D. 1992: Lebensmittelproteine - Biochemie und funktionelle Eigenschaften, Ernährungsphysiologie, chemische Modifizierung. B. Behr's Verlag GmbH & Co. Hamburg). Proteine für Bindemittelformulierungen lassen sich nach der Rohstoffbasis bzw. nach der Herkunft untergliedern in Glutine (tierisches Bindegewebe), Kaseine (Hauptbestandteil des Milcheiweißes), Albumine (in Wasser lösliche Proteine, z. B. Blutalbumin, Eiweißalbumin) sowie Pflanzenproteine (z. B. Soja, Mais, Weizen).

"Natürliche Leime" auf tierischer und pflanzlicher Basis sind seit dem Altertum bekannt. Entgegen verschiedener Aussagen in der Fachliteratur, wonach z.B. natürliche Bindemittel auf Proteinbasis (u.a. Glutin- oder Albuminleime) in der Spanplattenherstellung seit langem bekannt sind (Holz-Lexikon, 2. Auflage, 1972, DRW-Verlags GmbH), werden für eine großtechnische industrielle Holzwerkstoff-, speziell Spanplattenherstellung seit mehr als 80 Jahren Kunstharze, vorzugsweise auf Aminoplast- und Phenolbasis, als Bindemittel eingesetzt (Klauditz, W.: Entwicklung, Stand und holzwirtschaftliche Bedeutung der Holzspanplattenherstellung. Holz als Roh- und Werkstoff 13, S. 405-421; Kollmann, F.; Schnülle, F.; Schulte, K. 1955: Untersuchungen zur Beleimung von Spangemischen. Holz als Roh- und Werkstoff 13, S. 440-449; Fahmi; F. 1957: Die Entwicklung der Holzspanplatte in dokumentarischer Sicht und der verfahrenstechnische Beitrag von Novopan. Holz als Roh- und Werkstoff 15, S. 24-35; Plath, E. 1976: Holz-Kunststoff-Kombinationen. In: 50 Jahre Hornitex-Werke).

Die industrielle Entwicklung von Bindemitteln auf Basis pflanzlicher Sojaproteine geht hauptsächlich auf Arbeiten in den USA zurück. Diese Bindemittel wurden bis Mitte der 40er Jahre in erheblichen Mengen insbesondere zur Erzeugung von Douglasiensperrholz, nicht aber zur Herstellung partikelförmiger Holzwerkstoffe verwendet (Weackley, F. B.; Mehltretter, C. L.1965: Low Cost Protein Glue For Southern Pine Plywood. Forest Products Journal, p. 8-12). Die Bindemittelformulierung erfolgt bei Sojaproteinen in ähnlicher Weise wie bei Kaseinleimen. Die Mehle werden mit Natronlauge gequollen und mit gewissen Anteilen von Kalziumhydroxid zur Gelatinierung gebracht. Zur Erhöhung von Klebrigkeit und Wasserbeständigkeit werden Zusätze von Phenol und/oder Zuckerlösungen empfohlen (Plath, E.; Plath, L. 1963: Taschenbuch der Kitte und Klebstoffe, 4. Auflage, Wissenschaftliche Verlagsgesellschaft mbH, Stuttgart) ohne dass der Nachweis einer Eignung dieser Bindemittelkombinationen für Holzwerkstoffe erbracht wurde.

Untersuchungen zur Verbesserung der Feuchtebeständigkeit von UF-Harzen mit Proteinen bei der Sperrholzverklebung zeigen, dass durch die Vernetzung sekundärer Aminogruppen der Proteinkette mit Formaldehyd und reaktiven Methylolgruppen der UF-Harze ein Protein/Harnstoff-Formaldehyd-Gel entsteht, das die Feuchtebeständigkeit wesentlich verbessert (Wang, S.; Pizzi, A. 1997: Improving UF plywood adhesives water resistance by coreaction with proteins. Holz als Roh- und Werkstoff 55, S. 158).

Durch enzymatische Modifizierung von Sojaprotein mit Trypsin konnten die Klebeeigenschaften von Sojaleimen für Flächenverklebungen deutlich erhöht werden (Kalapathy, U.; Hettiarachchy, N. S.; Myers, D.; Hanna, M. A. 1995: Modification of soyproteins and their adhesive properties on woods. JAOCS Vol.72, No.5, p. 507-510).

Es wurde auch festgestellt, dass sich Sojaproteinisolate in Kombination mit Phenol-Recorcin-Formaldehyd (PRF)-Harzen für die Verklebung von keilgezinkten, frischem (nichtgetrocknetem) Vollholz eignen, wobei dann derartige Verklebungen gute Feuchtebeständigkeiten und reduzierte Formaldehydemissionen aufweisen (Clay, J. D.; Vijayendran, B.; Moon, J. 1999: Rheological study of soy protein-based PRF wood adhesives. Annu. Tech. Conf. - Soc. Plast. Eng., 57^{th} (Vol.1), p. 1298-1301).

Es ist bekannt, dass Kombinationen aus Sojaproteinhydrolysaten mit Phenolharzen für wasserfeste Flächenverklebungen eingesetzt werden können (Kreibich, R. E. 1995: New adhesives based on soybean proteins. Holzforschung und Holzverwertung Nr. 5, S. 87). Ein Vergleich zwischen synthetischen und natürlichen Bindemitteln auf Sojaproteinbasis bei der Herstellung von MDF und HDF aus Holzfasern, Maisstengeln oder Switchgras (Pacnicum virgatum) ergab allerdings eine bessere Dauerhaftigkeit der synthetischen Bindemittel (Kuo, M.; Adams, D.; Myers, D.; Curry, D.; Heemstra, H.; Smith, J. L.; Bian, Y. 1998: Properties of wood/agricultural fibreboard bonded with soybean-based adhesives. Forest Products Journal Vol. 48, No.2, p. 71-75).

Eine große Anzahl überwiegend japanischer Patentanmeldungen und Patente hat die Verwendung von Weizenmehlen als Füllstoff in PF- und UF-Harzen zum Gegenstand /JP 11124556; JP 11131038, JP 11172222; CN 1172140; JP 11172221; JP 11302618; JP 11209564; JP 11131032; US 5912317; JP 111722222; JP 11124555; JP 11131038; JP 10310755; WO 9909083; JP 11092738; JP 11105010; JP 11114909; JP 10151605; JP 10140124; JP 10279909; JP 10110151; JP 10168421; JP2001226654/. Diese Mehle eignen sich als Streckmittel und zeichnen sich teilweise, bedingt durch ihren 10 bis 15 %igen Proteingehalt dadurch aus, Formaldehyd zu binden. Sie eignen sich damit zur Herstellung von Holzwerkstoffen mit sehr geringen Formaldehydemissionen. Auf die Feuchtebeständigkeit von mit diesen Klebstoffen hergestellten Holzwerkstoffen wirkt sich der Weizenmehlzusatz nicht vorteilig aus.

Weizenmehle zeigen zudem in PF- und UF-Harzen das Eigenschaftsbild eines aktiven Füllstoffs, der Einfluss auf den Verlauf der Harzaushärtung und die Festigkeit der resultierenden Bindungen hat (Umemura, K. 1997: Curing Behavior and Bonding Performance of Wodd Adhesives under High-Pressure Steam. Wood Res., 84, p. 130-173 (part 3); Kamoun, C.; Pizzi, A.; Garcia, R. 1998: The effect of humidity on crosslinked and entanglement networking of formaldehyde-based wood adhesives. Holz als Roh- und Werkstoff 56, S. 235-243). Der Nachweis zur Eignung derartiger Bindemittel zur Herstellung von Holzwerkstoffen mit verbesserter Feuchtebeständigkeit wird nicht erbracht.

Es wird weiterhin beschrieben, dass Weizenmehle den Verlauf der Aushärtung von Phenolharzen unter gleichzeitiger Verwendung eines Härters auf Oxazolidin-Basis beeinflussen, wobei die Mehle als Sorbens für Wasser fungieren (US 5858553).

In der Patentschrift WO 01/59026 werden die Grundprinzipien der Phenolharzbildung auf Sojaproteine übertragen. Genauso wie sich in Phenol, Harnstoff, Melamin oder deren Derivate mittels Formaldehyd -CH₂-OH-Gruppen einführen lassen (Methylolierung), lassen sich auch an den freien Aminogruppen (-NH₂-Gruppen) der Proteine Methylolierungsreaktionen durchführen. Formal werden dabei die Wasserstoffatome der -NH₂₋Gruppen durch -CH₂-OH-Gruppen ersetzt. Derartig methylolierte Proteine können nun mit entsprechend methylolierten Phenolen, Harnstoffen bzw. Melaminen zur Reaktion gebracht werden. Analog zu den Phenol-Formaldehyd-Harzen, Harnstof-Formaldehyd-Harzen oder Melamin-Formaldehyd-Harzen entsteht quasi eine Art von Protein-Phenol-Formaldehyd-Harzen, Protein-Harnstoff-Formaldehyd-Harzen oder Protein-Melamin-Formaldehyd-Harzen.

Wesentlicher Nachteil der in WO 01/59026 aufgeführten Erfindung ist, dass sich die entwickelten Bindemittelkombinationen mit Quellwerten von 13,6 bis 57,1 % nach 24 Stunden Wasserlagerung bzw. 30,6 bis 167,7 % nach 2 Stunden Kochen in keiner Weise zur Herstellung von quellungsvergüteten Faserplatten für einen Einsatz mit erhöhten Anforderungen an die Feuchtebeständigkeit der Verklebung eignen. Zudem finden für die Co-Kondensation ausschließlich hochmolekulare preisintensive hydrolysierte Sojaprotein-Agrarprodukte Verwendung.

Die DE 10021952 stellt natürliche Bindemittel für die Herstellung von Holzwerkstoffen, Holzspanplatten und Faserplatten vor. Genannt werden dabei auch Proteine als Bindemittel für die Herstellung von Holzwerkstoffen, der Schwerpunkt liegt aber auf Bindemittelformulierungen auf Tannin-Basis, deren Einsatz als Bindemittel zur MDF-Herstellung jedoch absolut unwirtschaftliche Presszeitfaktoren von 24 Sekunden pro Millimeter Plattendicke erfordert.

In der EP 0997513 wird ein Proteinkleber/Bindemittel auf Basis von Sonnenblumenproteinen vorgeschlagen. Die Klebstoffformulierungen enthalten neben Sonnenblumenproteinen zusätzlich natürliche polyphenolische Verbindungen wie Chlorogen- oder Kaffeesäure und sollen sich für die Herstellung von Holzwerkstoffen unter Verzicht auf PF- und UF-Harzen eignen, wobei dieser Nachweis nicht erbracht wurde.

Koch et al. untersuchten die Herstellung von Phenolharzen vom Novolak- und Resol-Typ unter Mitverwendung von Stärken und Stärkenhydrolysaten (Koch, H.; Krause, F.; Steffan, R.; Woelk, H.U. 1983: Herstellung von Phenolharzen unter Verwendung von Stärkeprodukten. starch/stärke 35, Nr. 9, S. 304-313). Dabei wurden die Kohlenhydrate in situ durch saure Katalyse zu 5-Hydroxymethylfurfural dehydratisiert, das in Gegenwart von Phenol und Formaldehyd in die Harze eingebaut wird. Verglichen mit kommerziellen Phenolharzen sind Einsparungen von bis zu 40 % Phenol und 65 % Formaldehyd vorstellbar. Bei sehr geringen Restmonomergehalten härten die modifizierten Harze mit zunehmendem Kohlenhydrateinbau rascher aus, was eine Beschleunigung technischer Verarbeitungsprozesse ermöglichen könnte. Die Verwendung von Proteinen war nicht Gegenstand der Untersuchungen.

Es ist auch bekannt, dass bei der Herstellung von schwerentflammbaren Holzwerkstoffen, die nach DIN 4102 der Brandklasse B1 entsprechen, anstelle synthetischer Kleber Proteinkleber pflanzlichen oder tierischen Ursprungs verwendet werden (DE 4026435). Einschränkend sei darauf hingewiesen, dass Span- und Faserplatten ausdrücklich ausgeklammert werden und sich diese Entwicklung vielmehr zur Herstellung von Stäbchen-Tischlerplatten, Stab-Tischlerplatten, Massivholz-Verbundplatten, Massivleimholzplatten und Sperrholz eignet. Nach diesem Verfahren hergestellte Holzwerkstoffplatten entsprechen qualitativ nicht den schwer entflammbar ausgerüsteten Holzwerkstoffplatten.

Im Rahmen der Versuche von Kehr und Sirch wurde von der Verwendung pflanzlicher Proteine als alleinigem Bindemittel für Holzwerkstoffe ausgegangen (Kehr, E.; Sirch, H.-J. 1998: Entwicklung, Herstellung und Prüfung von Spanplatten unter Einsatz von natürlichen Bindemitteln. Unveröff. Abschlußbericht ihd Dresden, Juni 1998). Bevorzugt eingesetzt wurden dabei hochmolekulare pulverförmige Produkte mit Proteingehalten zwischen 50 und 85 %, bezogen auf Trockensubstanz, die überwiegend in der Lebens- und Futtermittelindustrie Verwendung finden und deren Formulierung zu Bindemitteln grundsätzlich basische Komponenten erforderte. Beim Vergleich von Bindemittelformulierungen auf Basis von Soja-, Mais-, Raps- oder Weizenproteinen wiesen vor allem mit Weizenprotein gebundene Spanplatten relativ gute Festigkeitseigenschaften auf. Als nachteilig sind die hohen Quellwerte nach Wasserlagerung anzusehen, die eine Verwendung derartiger Werkstoffe im Feuchtbereich ausschließen (vgl. auch DE 19843493). Zudem führten die im Vergleich zu synthetischen Harzen geringen Feststoffgehalte in den Bindemittelformulierungen auf Proteinbasis zu einem hohen Feuchtegehalt der Partikel vor dem Pressen, woraus im Widerspruch zu heute industrieüblichen geringen Presszeitfaktoren für eine Herstellung prüffähiger Holzwerkstoffplatten relativ lange Presszeiten resultierten. Die Formaldehydabgabe der Spanplatten entsprach den Werten nativen Holzes. Zusammenfassend wurde festgestellt, dass auf Grund der gegenwärtigen Preise für Lebens- und Futtermittelproteine bzw. deren Verfügbarkeit kein umfassender Austausch der nach den Festigkeitseigenschaften vergleichbaren, am Markt verfügbaren UF-Harz-gebundenen Möbelspanplatten möglich ist.

Untersuchungen zur Substitution von Phenolharzen durch hochmolekulare Weizenproteinkleber zeigen, dass mit derartigen Bindemittelkombinationen die Herstellung von Spanplatten mit relativ hoher Feuchtebeständigkeit erlauben (Krug, D.; Sirch, H.-J. 1999: Proteine als Kleber - Anteilige PF-Harz-Substitution möglich. Holz-Zentralblatt 125, S. 773). Allerdings kamen für diese Versuche ausschließlich hochwertige Weizenproteine zum Einsatz, die bei der Stärkeherstellung pulverförmig anfallen und im Lebensmittelbereich (u.a. als Backtreibmittel) deutlich höhere Abnahmepreise als das eigentliche Hauptprodukt Stärke erzielen. Auf Grund des Löslichkeitsverhaltens erforderte die Formulierung dieser Proteinpulver zu Bindemitteln im wesentlichen basische Komponenten. Eine direkte Verarbeitung der Pulver erlaubte nicht die Herstellung prüffähiger Holzwerkstoffplatten.

Einsatzpotentiale für Weizenproteine im sogenannten Non-food-Bereich werden vor allem in der Papierindustrie - speziell in Papierstreichmassen - sowie als Bestandteil von Klebstoffen in der Klebstoffindustrie gesehen. Zu den gängigen Proteinmodifikationen zählen: chemische Modifikation wie Acetyllierung, Succinylierung, Phosphorylierung, Reduktionen und Oxidationen, Amidierung, Veresterungen usw.; enzymatische Modifikationen, vielfach durch Proteasen; physikalisch-chemische Methoden wie Denaturierungsreaktionen über Erhitzen, pH-Wert-Änderungen etc. Die durch chemische Reaktionen bewirkten Änderungen der technofunktionellen Eigenschaften der Weizenproteine werden in den Arbeiten von Graf et al., Kersting et al. und Vereijken et al. (De Graf, L. A.; Kolster, P.; Vereijken, J. M. 1998: Modification of wheat gluten for non-food applications. Plant Proteins Eur. Corps, p. 335-339; Kersting, H. J.; Lindhauer, M. G.; Bergthaller, W. 1993: Application of wheat in non-food industry. Proceedings 5^{th} International Workshop on Gluten Proteins, Detmold, Germany, June 7-9 1993; Vereijken; J. M. Kuiper, H. J.; Kok, J. C. 1993: Non-Traditional Applications of Wheat Gluten. Proceedings 5^{th} International Workshop on Gluten Proteins, Detmold, Germany, June 7-9 1993) diskutiert. Untersuchungen zu Verwendungsmöglichkeiten von Rapsproteinen belegen, dass Einsatzpotentiale im vor allem in den Bereichen Klebstoffe, Streich- und Beschichtungsmittel zu sehen sind (Schwenke, K. D.; Krause, J.-P.; Dudek, S.; Mothes, R. 1998: Untersuchungen zum technischen Einsatzpotential pflanzlicher Proteine aus entfettetem Raps als Grundlage für technische Nutzungen. Vorlaufforschung FKZ 95NR167-F, Forschungsbericht des Institutes für Angewandte Proteinchemie e.V., Kleinmachnow).

Zudem sind Bindemittel aus einer Phenol-Formaldehyd-Harz-Komponente und einer niedermolekularen weizen- und/oder maisproteinhaltigen natürlichen Komponente, wobei die Phenol-Formaldehyd-Harz-Komponente ein modifiziertes PF-Harz mit einem pH-Wert im Bereich von 7 bis 13 ist, aus Chemical Abstract 41:11098, US 4,942,191 A, JP 60210684 A und US 4,886,854 A bekannt.

Wesentliche Nachteile der sonstig bekannten Bindemittel für Holzwerkstoffe mit anteiliger oder vollständiger Substitution von Phenol-Formaldehyd-Harzen durch pflanzliche Proteine sind: Für die Substitution werden hochmolekulare Proteinprodukte, vorzugsweise auf Sojabasis eingesetzt, die gegenüber Rohstoffen zur Herstellung industrieüblicher Phenol-Formaldehyd-Harze keinen Preisvorteil bieten bzw. sogar teurer sind und deren Einsatz als Bindemittel in Holzwerkstoffen in der Regel zu höheren Prozesskosten, speziell durch längere Presszeiten führt. Zudem weisen mit derartigen Bindemitteln hergestellte Holzwerkstoffe im Vergleich zu Holzwerkstoffen mit ausschließlicher Phenol-Formaldehyd-Harz-Bindung keine verbesserten Eigenschaften, speziell Feuchtebeständigkeit, auf. Oftmals führt der Proteinzusatz sogar zu einer Eigenschaftsverschlechterung.

Aufgabe der Erfindung ist es, ein Bindemittel für die Herstellung von quellungsvergüteten Holzwerkstoffen und die Verklebung von Holz und Holzwerkstoffen vorzuschlagen, dass die oben genannten Nachteile bekannter Lösungen überwindet.

Diese Bindemittel sollen sich zur Herstellung von Werkstoffen insbesondere auf Partikelbasis, wie Spanplatten, MDF oder OSB für eine Verwendung im Feucht- und/oder Außenbereich eignen. Vorrangig gilt es dabei, die Dickenquellung dieser Werkstoffe nach 24 h Wasserlagerung auf ein die Verarbeitung und den Einsatz der Platten nicht beeinträchtigendes Niveau von weniger als 12 % und darunter dauerhaft zu senken.

Darüber hinaus steht die Aufgabe, daß solche Bindemittel auch für eine Verklebung von Furnieren oder Vollholz miteinander (u.a. Sperrholz, Fumierschichtholz, Massivholzplatten, Brettschichtholz) oder zur flächigen Verklebung von partikelförmigen Holzwerkstoffen mit Furnieren oder Vollholz (z.B. Mehrschichtparkett, Furnieren von Spanplatten) eingesetzt werden können.

Diese Aufgabe wird durch die Merkmale des Anspruchs 1 gelöst. Eine zweckmäßige Ausgestaltung der Erfindung ergibt sich aus den Merkmalen des Anspruches 2.

Nach Maßgabe der Erfindung ist ein Bindemittel zur Herstellung von quellungsvergüteten Holzwerkstoffen und zur Verklebung von Holz und Holzwerkstoffen, bei dem das Bindemittel aus einer Phenol-Formaldehyd-Harz-Komponenten und einer weizen- und/oder maisproteinhaltigen natürlichen Komponenten mit niedrigem Molekulargewicht besteht, vorgesehen. Dabei ist die Phenol-Formaldehyd-Harz-Komponente ein modifiziertes oder ein nicht-modifiziertes PF-Harz mit einem pH-Wert im Bereich von 7 bis 13. Wesentlich ist, daß die natürliche Komponente während der Harzherstellung einkondensiert wurde. Das so kombinierte Bindemittel wird für die kostengünstige Herstellung von partikelförmigen Holzwerkstoffen wie Spanplatten, MDF oder OSB verwendet, die gegenüber hoher Luftfeuchtigkeit relativ beständig und damit im Feuchtbereich einsetzbar sind. Neben den positiven Quellungseigenschaften zeichneten sich diese Werkstoffe auch durch außerordentlich geringe Formaldehydgehalte aus.

Unter MDF sind dabei sowohl Faserplatten mittlerer Dichte, Faserplatten hoher Dichte (HDF) mit Rohdichten ≥ 800 kg/m³ als auch Leicht-MDF (LDF) mit Rohdichten ≤ 650 kg/m³ sowie Ultraleicht-MDF mit Rohdichten ≤ 550 kg/m³ zu verstehen [DIN EN 316].

Erfindungsgemäß besteht das Bindemittel also aus einer modifizierten Phenol-Formaldehyd-Harz-Komponente, in welche während der Harzherstellung eine preiswerte, niedermolekulare weizen- und/oder maisproteinhaltige natürliche Komponente einkondensiert wird. Die Erfindung kann weiter vorteilhaft so ausgebildet sein, daß der Proteingehalt im Bindemittel 1 bis 20 Masse-%, bezogen auf die PF-Harz-Komponente, beträgt.

Die Erfindung wird nachstehend anhand von 3 Ausführungsbeispielen näher erläutert.

### Beispiel 1

Ein unter industrieüblichen Kochereinstellungen (Temperatur 170°C, Verweilzeit 4 min) hergestellter Kiefernholzfaserstoff wird mit dem erfindungsgemäßen Bindemittel aus Phenol-Formaldehyd-Harz und niedermolekularer weizenproteinhaltiger natürlicher Komponente mit einem Feststoffanteil von 12 % sowie einem Zusatz von 1 % Paraffindispersion beleimt. Vergleichend werden auch Varianten hergestellt, bei welchen die nichtmodifizierten oder modifizierten PF-Harze vor der Bindemittel-Verarbeitung anteilig durch niedermolekulare weizenproteinhaltige natürliche Komponenten ersetzt werden. Nach der Trocknung in bekannter Weise folgt die Faservliesbildung und das Verpressen mit Presszeitfaktoren von 15 s/mm sowie Presstemperaturen von 200 °C zu 10 mm dicken, einschichtigen MDF. Ausgewählte Eigenschaften sind in Tabelle 1 zusammengefasst.

### Beispiel 2

lndustrieanalog hergestellte Deckschichtstrands aus Kiefernholz werden mit dem erfindungsgemäßen Bindemittel aus Phenol-Formaldehyd-Harz und niedermolekularer weizenproteinhaltiger natürlicher Komponente mit einem Feststoffanteil von 9 % sowie einem Zusatz von 1 % Paraffindispersion beleimt. Der Proteinanteilanteil, beträgt 3 bzw. 6 Masse-%, bezogen auf PF-Harz-Komponente. Die Mittelschichten der im Verhältnis 20 : 60 : 20 dreischichtig aufgebauten OSB werden grundsätzlich mit polymeren Diphylmethan-4,4-diisocyant (PMDI) gebunden. Vergleichend wurden auch Varianten mit Kaliumcarbonat als Härtungsbeschleuniger hergestellt. Im Anschluss an die Trocknung im Trommeltrockner folgt die orientierte Strandvliesbildung und das Verpressen mit Presszeitfaktoren von 12 s/mm sowie Presstemperaturen von 210 °C zu 18 mm dicken OSB. Tabelle 2 enthält wesentliche Werkstoffeigenschaften.

### Beispiel 3

Es erfolgt eine Beleimung von Fichtenschneidspänen mit dem erfindungsgemäßen Bindemittel aus Phenol-Formaldehyd-Harz und niedermolekularer maisproteinhaltiger natürlicher Komponente mit einem Feststoffanteil von 10 % sowie einem Zusatz von 1 % Paraffindispersion. Der Proteinanteilanteil, beträgt 2, 4 bzw. 6 Masse-%, bezogen auf PF-Harz-Komponente. Nach der Trocknung im Stromrohr folgt die Spanvliesbildung und das Verpressen mit Presszeitfaktoren von 13 s/mm sowie Presstemperaturen von 200 °C zu 16 mm dicken, einschichtigen Spanplatten. Die ermittelten Eigenschaften sind Bestandteil von Tabelle 3.

### Tabelle 1.

Eigenschaften von 10 mm dicken, einschichtigen MDF aus Kiefernholzfaserstoff unter Verwendung des erfindungsgemäß hergestellten Bindemittels aus Phenol-Formaldehyd-Harz und niedermolekularer weizenproteinhaltiger natürlicher Komponente sowie unter Verwendung nichtmodifizierter oder modifizierter PF-Harze, die vor der Bindemittel-Verarbeitung anteilig durch niedermolekulare weizenproteinhaltige natürliche Komponenten ersetzt werden, Bindemittel-Feststoffanteil bei allen Varianten konstant 12 %, bezogen auf atro Faserstoff:
- WP: niedermolekulare, weizenproteinhaltige natürliche Komponente
- PF1: nichtmodifiziertes PF-Harz ohne WP-Zusatz
- PF2: modifiziertes PF-Harz mit einkondensiertem WP, 4 Masse-% Proteinanteil, bez. auf PF-Harz-Komponente
- PF1 oder 2 + WP: nichtmodifiziertes oder modifiziertes PF-Harz, welches vor der Bindemittel-Verarbeitung durch 17 bzw. 33 Masse-% WP anteilig ersetzt wurde

| **Eigenschaften** | **Bindemittelzusammensetzung** | | | | | |
|---|---|---|---|---|---|---|
| | 100% PF1 | 83% PF1+ 17% WP | 67% PF1+ 33% WP | 100% PF2 | 83% PF2+ 17% WP | 67% PF2+ 33% WP |
| Rohdichte [kg/m³] | 845 | 837 | 824 | 834 | 826 | 822 |
| Querzugfestigkeit [N/mm²] | 1,08 | 1,04 | 0,77 | 1,17 | 1,08 | 0,86 |
| Querzugfestigkeit nach Kochprüfung [N/mm²] | 0.12 | 0,15 | 0,07 | 0,16 | 0,13 | 0,07 |
| Biegefestigkeit [N/mm²] | 41,4 | 39,0 | 29,7 | 45,5 | 36,2 | 29,0 |
| Biege-E-Modul [N/mm²] | 3780 | 3660 | 3130 | 4270 | 3820 | 3410 |
| Dickenquellung nach 24 h WL [%] | 12,8 | 7,4 | 7,9 | 9,7 | 8,4 | 8,8 |
| Formaldehydgehalt [mg HCHO/100 g atro Platte], B-Wert | 1,55 | 0,82 | 1,53 | 0,16 | 0,31 | 0,76 |
| Feuchtegehalt bei Prüfung [%] | 9,1 | 9,1 | 9,4 | 8,5 | 8,5 | 9,0 |

### Tabelle 2.

Eigenschaften von 18 mm dicken, dreischichtigen OSB aus Kiefernholzstrands mit PMDI-Bindung in der Mittelschicht und unter Verwendung des erfindungsgemäß hergestellten Bindemittels aus Phenol-Formaldehyd-Harz und niedermolekularer weizenproteinhaltiger natürlicher Komponente, Bindemittel-Feststoffanteil bei allen Varianten konstant für Mittelschicht 4 %, für Deckschicht 9 %, jeweils bezogen auf atro Strands:
- WP: niedermolekulare, weizenproteinhaltige natürliche Komponente
- PF3: modifiziertes PF-Harz mit einkondensiertem WP, 3 Masse-% Proteinanteil, bezogen auf PF-Harz-Komponente
- PF4: modifiziertes PF-Harz PF3, enthält 5 % Kaliumcarbonat, bezogen auf PF-Harz-Rohleim als Härter
- PF5: modifiziertes PF-Harz mit einkondensiertem WP, 6 Masse-% Proteinanteil, bezogen auf PF-Harz-Komponente
- PF6: modifiziertes PF-Harz PF5, enthält 5 % Kaliumcarbonat, bezogen auf PF-Harz-Rohleim als Härter

| **Eigenschaften** | **Deckschicht-Bindemittel** | | | |
|---|---|---|---|---|
| | PF3 | PF4 | PF5 | PF6 |
| Rohdichte [kg/m³] | 623 | 631 | 632 | 619 |
| Querzugfestigkeit [N/mm²] | 0,68 | 0,65 | 0,73 | 0,74 |
| Querzugfestigkeit nach Kochprüfung [N/mm²] | 0,19 | 0,22 | 0,26 | 0,31 |
| Biegefestigkeit [N/mm²] | 37,2 | 33,9 | 36,5 | 29,2 |
| Biege-E-Modul [N/mm²] | 4200 | 4250 | 4310 | 4220 |
| Dickenquellung nach 24 h WL [%] | 10,7 | 9,8 | 9,9 | 9,3 |
| Formaldehydgehalt [mg HCHO/100 g atro Platte], B-Wert | 1,02 | 0,88 | 0,37 | 0,58 |

### Tabelle 3.

Eigenschaften von 16 mm dicken, einschichtigen Spanplatten aus Fichtenholzschneidspänen unter Verwendung des erfindungsgemäß hergestellten Bindemittels aus Phenol-Formaldehyd-Harz und niedermolekularer maisproteinhaltiger natürlicher Komponente, Bindemittel-Feststoffanteil bei allen Varianten konstant 10 %, bezogen auf atro Späne:
- MP: niedermolekulare maisproteinhaltige natürliche Komponente
- PF7: modifiziertes PF-Harz mit einkondensiertem MP, 2 Masse-% Proteinanteil, bezogen auf PF-Harz-Komponente
- PF8: modifiziertes PF-Harz mit einkondensiertem MP, 4 Masse-% Proteinanteil, bezogen auf PF-Harz-Komponente
- PF9: modifiziertes PF-Harz mit einkondensiertem MP, 6 Masse-% Proteinanteil, bezogen auf PF-Harz-Komponente

| **Eigenschaften** | **Bindemittel** | | |
|---|---|---|---|
| | PF7 | PF8 | PF9 |
| Rohdichte [k₉/m³] | 686 | 673 | 678 |
| Querzugfestigkeit [N/mm²] | 0,70 | 0,76 | 0,69 |
| Querzugfestigkeit nach Kochprüfung [N/mm²] | 0,18 | 0,17 | 0,13 |
| Biegefestigkeit [N/mm²] | 22,4 | 24,7 | 20,1 |
| Biege-E-Modul [N/mm²] | 2980 | 3090 | 3010 |
| Dickenquellung nach 2 h WL [%] | 7,0 | 6,7 | 6,4 |
| Dickenquellung nach 24 h WL [%] | 11,9 | 11,6 | 13,1 |
| Feuchtegehalt bei Prüfung [%] | 11,0 | 10,5 | 10,6 |

## Patentansprüche

1. Bindemittel für die Herstellung von quellungsvergüteten Holzwerkstoffen und die Verklebung von Holz und Holzwerkstoffen, bei dem das Bindemittel aus einer Phenol-Formaldehyd-Harz-Komponente und einer weizen- und/oder maisproteinhaltigen natürlichen Komponente mit niedrigem Molekulargewicht besteht und die Phenol-Formaldehyd-Harz-Komponente ein modifiziertes oder nicht-modifiziertes PF-Harz mit einem pH-Wert im Bereich von 7 bis 13 ist, **dadurch gekennzeichnet, daß** die natürliche Komponente während der Harzherstellung einkondensiert wurde.

2. Bindemittel nach Anspruch 1, **dadurch gekennzeichnet, daß** der Proteingehalt im Bindemittel 1 bis 20 Masse-%, bezogen auf die PF-Harz-Komponente, beträgt.

## Claims

1. A binder for the production of swell-treated wood materials and for the bonding of wood and wood materials, where the binder comprises a phenolformaldehyde resin component and a natural component containing wheat and/or corn protein with a low molecular weight and where the phenolformaldehyde resin component is a modified or unmodified PF resin with a pH value in the range from 7 to 13, **characterised in that** the natural component was condensed in during production of the resin.

2. Binder in accordance with Claim 1, **characterised in that** the protein content in Binder 1 amounts to up to 20% by mass relative to the PF resin component.

## Revendications

1. Liant pour la fabrication de matériaux à base de bois traité par gonflement et le collage de bois et de matériaux à base de bois, le liant étant constitué d'un composant de résine phénol-formaldéhyde et d'un composant naturel contenant des protéines de blé et/ou de maïs de faible poids moléculaire et le composant de résine phénol-formaldéhyde étant une résine PF modifiée ou non modifiée avec un pH compris entre 7 et 13, **caractérisé en ce que** le composant naturel a été condensé pendant la fabrication de la résine.

2. Liant suivant la revendication 1, **caractérisé en ce que** la teneur de protéines du liant se situe entre 1 et 20 masse % par rapport au composant de résine PF.
